(19) Europäisches Patentamt
European Patent Office
Office européen des brevets

(11) Publication number: 0 408 297 A1

# (12) EUROPEAN PATENT APPLICATION

(21) Application number: 90307508.3

(22) Date of filing: 10.07.90

(51) Int. Cl.5: C02F 5/14

(30) Priority: 11.07.89 GB 8915815

(43) Date of publication of application: 16.01.91 Bulletin 91/03

(84) Designated Contracting States: DE FR GB IT

(71) Applicant: WARWICK INTERNATIONAL LIMITED
Wortley Moor Road
Leeds LS12 4JE(GB)

(72) Inventor: Holt, John Michael
2 Bryn Felin
Pentre Halkyn, Clwyd Walgs(GB)

(74) Representative: Jones, Helen Marjorie Meredith
Gill Jennings & Every 53-64 Chancery Laneane
London WC2A 1HN(GB)

## (54) Scale inhibition.

(57) A new scale inhibitor is disclosed which is a compound of the general formula I

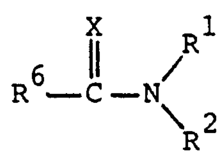

I

in which $R^6$ is $-NR^3R^4$, $R^7 \overset{X}{\overset{\|}{C}} NR^3R^4$, hydrogen or a straight or branched chain alkyl group, in which $R^7$ is $C_{1-4}$ branched or straight chain alkylene, $R^1$ to $R^4$ are different or are the same and each is selected from hydrogen, straight and branched chain alkyl groups and $C_{1-4}$ branched and straight chain alkylene-phosphonic acid groups or water soluble salts thereof, provided that at least one of $R^1$ to $R^4$ represents one of the said alkylenephosphonic acid groups and the or each X is independently selected from an oxygen atom, a sulphur atom and a group $NR^5$ in which $R^5$ is an alkyl or aryl group, or a water soluble salt thereof. One example of such a scale inhibitor is the tetra(methylenephosphonic acid) derivative of urea. The compounds exhibit good barium sulphate scale inhibition, as well as calcium carbonate scale inhibition and retain their properties even in the presence of a dissolved iron, for instance in downhole oil well uses.

EP 0 408 297 A1

# SCALE INHIBITION

The present invention relates to a process for inhibiting calcium and barium scale formation in aquatic systems in which iron is present. The process involves the use of a methylene phosphonate.

Most natural waters contain dissolved salts such as calcium, magnesium etc. When these salts are subjected to heating the dissolved salts may form insoluble salts which can deposit either as scale on a heat transfer surface in contact with the water or aqueous system or as a precipitate in the bulk water. Severe problems are often encountered by these salts exceeding their solubility products. Another scale forming ion which is often present in water is barium and many conventional scale inhibitors are not sufficiently effective at preventing barium scale inhibition. Barium is a major problem in off-shore oil exploration.

Scale deposition on heat transfer surfaces are harmful because they lower the heat transfer efficiency of the surface and can cause overheating and damage to equipment with the possibility of failure. Other related problems include obstruction of flow, localised under deposit corrosion, wear of components and unscheduled shutdown.

The most common of all scales is calcium carbonate. This is formed by the thermal decomposition of the bicarbonate ion, which is present in most natural waters, to form carbon dioxide, carbonate and water. The carbonate ion subsequently precipitates from the solution as calcium carbonate. Calcium carbonate has a much lower solubility than calcium bicarbonate and also an inverse solubility product ie the solubility decreases with increase in temperature. Barium present in water may form barium sulphate scale which is almost impossible to remove chemically. In off-shore oil exploration barium is often present in the formation water and when this combines with sulphate from injected sea water barium sulphate scale forms.

Many phosphonic acids and their water-soluble salts, usually alkali ammonium, amine or metal salts, are known to be useful as scale inhibitors. Frequently used phosphonates include: 1-hydroxyethane diphosphonic acid (HEDP), 2-phosphonobutane-1,2,4-tricarboxylic acid (PBTC), 2-hydroxyphosphonoacetic acid (HPA) and hydroxymethyl phosphonic acid (HMP) and aminomethylene phosphonates, such as nitrilotris(methylene phosphonic acid) (NTMP) ethylenediaminetetra(methylene phosphonic acid) (EDTMP) diethylenetriaminepenta(methylene phosphonic acid) (DETMP) and hexamethylenediaminetetra(methylene phosphonic acid) (HMDTP). However the performance of these phosphonates are severely restricted in the presence of iron.

The efficiency of a scale inhibitor may be assessed either by static tests or by dynamic tests. In a static test an aqueous solution of calcium carbonate containing a compound, which is to be tested for its scale inhibition properties, is allowed to stand for a given period, in some instances until the concentration of dissolved calcium remains constant. The ability of the compound under test to retain calcium ions in solution indicates its properties as a scale inhibitor. Another test which simulates a practical system involves dynamic conditions. Water containing calcium carbonate is moved through a capilliary tube and the rate of formation of scale blocking the tube is measured in the presence and absence of the compound under test ie the increase in pressure. This test can often be a better indicator of the practical usefulness of scale inhibitors than the static test.

The performance of the above phosphonates as calcium carbonate scale inhibitors has now been found to be inhibited by iron both in the static and the dynamic tests. Furthermore many of the compounds have insufficient effectiveness as barium sulphate scale inhibitors.

In US-A-4090959 N-methylene phosphonic acid derivatives of amides and imides are used as flame retardants and metal ion sequestrants for instance for sequestering calcium and iron ions. One of the compounds disclosed is N,N′-urea bis(methylenephosphonic acid). When used as sequestrants the compounds appear to be used in an amount of at least 10ppm in the aqueous solution.

In US-A-4079006 N-methylenephosphonic acid derivatives of aminocarboxylates, which can be formed by reaction of a lactam, phosphorous acid and formaldehyde, are disclosed for use as scale inhibitors in stoichiometric or substoichiometric, including threshold, amounts.

In EP-A-0010147 N-(methylenediphosphonic acid) derivatives of ureides are disclosed for use as scale inhibitors, for instance in substoichiometric amounts.

In US-A-4801388 alkylene phosphonic acid derivatives of polymers having amide functionality, such as polyacrylamide, are used as scale inhibitors, for instance for prevention of calcium and magnesium phosphate scale, or barium sulphate scale.

In EP-A-0177308 urea substituted by 1 to 4 methylenephosphonic acid groups, including urea tetra-(methylenephonic acid) are disclosed as cement setting retardants.

A process according to the present invention of inhibiting scale formation in aqueous liquids comprises

adding a scale inhibitor and is characterised in that the scale inhibitor is a compound of the general formula I

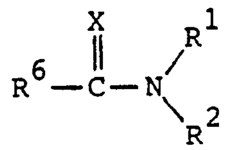

I

in which $R^6$ is $-NR^3R^4$, $-R^7\overset{X}{\overset{\|}{C}}NR^3R^4$, hydrogen or a straight or branched chain alkyl group, in which $R^7$ is $C_{1-4}$ branched or straight chain alkylene, $R^1$ to $R^4$ are different or are the same and each is selected from hydrogen, straight and branched chain alkyl groups and $C_{1-4}$ branched or straight chain alkylene-phosphonic acid groups and salts thereof, provided that at least one of $R^1$ to $R^4$ represents one of the said phosphonic acid groups or salts thereof, and the or each X is independently selected from an oxygen atom, a sulphur atom and a group $NR^5$ in which $R^5$ is an alkyl or aryl group.

Preferably $R^6$ is $-R^7\overset{X}{\overset{\|}{C}}NR^3R^4$ or, more preferably, $-NR^3R^4$, although it can also be a lower, eg $C_{1-4}$, alkyl, most often an ethyl, group. $R^7$ is usually methylene.

Preferably the alkylene chain of the alkylene-phosphonic acid group is methylene.

Preferably $R^1$ and $R^2$ are both alkylene-phosphonic acid groups and, where present, $R^3$ and $R^4$ are also both alkylene-phosphonic acid groups.

An alkyl group represented by any of $R^1$ to $R^4$ is preferably lower, eg $C_{1-4}$, alkyl, most preferably methyl.

Preferably X is oxygen.

Preferably the compound is carboxylbisnitrilo tetra (methylenephosphonic acid) CBNTMP, ie each of $R^1$ to $R^4$ is methylenephosphonic acid and X is oxygen (also known as urea tetra(methylenephosphonic acid)).

Phosphonates of the type of formula I wherein the alkylene group of the alkylenephosphonic acid is methylene or alkyl-substituted methylene can be prepared by the reactions of an amide or imide or the thio-analogue (including urea) with phosphorous acid and aldehyde. When the alkylene is unsubstituted methylene, the aldehyde is formaldehyde.

The scale inhibition by the compound is most suitably used in systems where iron is present in the water. The scale formation which is inhibited is usually that of calcium carbonate and is often in the present process also barium scale formation inhibition, eg barium sulphate scale inhibition.

The phosphonic acids are usually provided in the free acid form although may be in partially or fully neutralised salt form, that is where any of the phosphonic acid groups are in the form of the salt of an alkali metal, ammonium or amine.

The iron resistance of a scale inhibitor assesses the amount of phosphonate remaining in solution in an aqueous medium containing calcium carbonate and iron in a static test. The phosphonate left in solution, which has not been precipitated out of the solution, is able to act as a scale inhibitor for the calcium carbonate. The test is conducted as follows:

REAGENTS

1. Threshold Solution 1 (T.S.1)
3200ppm Malk (as $CaCO_3$ using $NaHCO_3$)
Malk = alkalinity to methyl orange
5.38 $NaHCO_3$ (anhydrous) per litre
2. Threshold Solution 2 (T.S.2)
8000ppm CaH (as $CaCO_3$ using $CaCl_2$)
CaH = calcium hardness
8.88g $CaCl_2$ (anhydrous) per litre
or 11.76g $CaCl_2 2H_2O$ per litre
3. $Fe^{3+}$ Solution : 1000ppm as Fe

4. Dilute solution of additive (usually 1000ppm)
5. Dilute NaOH for pH adjustment

To a flask is added 18.75 ml of TS2, 400ml of de-ionised water, 2.5ml of $Fe^{3+}$ solution, the 5ml of additive solution and 22.44ml of TS1. This solution is mixed and made up to 500ml with de-ionised water, to provide CaH of 300ppm (as $CaCO_3$) and Malk of 150ppm (as $CaCO_3$), 5ppm $Fe^{3+}$ and 10ppm additive. The pH is then adjusted to pH8.5 with dilute sodium hydroxide and transferred to a bottle. The bottle is sealed and placed in a water bath at 50°C for 24 hours. After this time, a sample is removed and filtered through a 0.45μm filter. The phosphonate concentration of the filtrate is determined using a conventional phosphonate assay.

The iron resistance of the phosphonate is reported as the percentage of the original phosphonate that remains in solution at the end of the test. To be useful in the present invention the iron resistance should preferably be at least 50% that is at least 50% of the phosphonate additive under test should remain in solution after the 24 hour test.

We have found that the iron resistance of the CBNTMP is greater than 50%.

The scale inhibition process according to the present invention is of use in any of the typical aqueous systems to be affected by scale problems, including oil well systems, cooling or steam raising systems, sea water evaporators, reverse osmosis units, closed circuit heating systems and gas scrubbing systems. The systems may be recirculating systems or may be single pass systems.

It is thought that the scale inhibitor is acting as a "threshold agent". These act in a manner such that precipitation is prevented by using a concentration of scale inhibitor which is much lower than that required to sequester the scale forming cation. A substoiciometric amount of the scale inhibitor stabilises a super-saturated solution from precipitation, probably by adsorption onto the crystal surface to inhibit or modify crystal growth, or prevent the attachment of crystals to surfaces.

The scale inhibitor may be dosed into the aqueous liquor in conventional manner. They may thus be continuously added to the aqueous liquid or may be added as a single dose in a predetermined period, the latter dosing method being suitable for recirculating systems.

The process of the invention is generally carried out in the presence of at least 1ppm iron (as ferrous or ferric ions), more usually in the presence of at least 2ppm and is particularly useful in the presence of at least 5ppm iron or even up to 10ppm, or 50ppm or more.

The phosphonate is added in amounts in the range 0.05ppm to 50ppm, usually in the range 0.1ppm to 25ppm, more usually 0.55 to 10ppm.

The process of the invention may be carried out in the presence of other compounds used to augment the phosphonate scale inhibitor. These may include other scale inhibitors, including other phosphonate scale inhibitors, dispersing agents, precipitating agents, corrosion inhibitors, sequestering agents, antifoams and biocides.

In the present invention there is further provided a new use of the compound of the formula I, as defined above, as a scale inhibitor, usually in substoichiometric amounts, for inhibition of calcium carbonate and/or barium sulphate scale.

The phosphonates used in the present invention may be provided in the usual types of compositions, usually in aqueous solution, preferably of maximum possible concentration, which can be as high as 75%, often up to 60%, or may be lower for instance around 25%. When those phosphonates are to be used in conjunction with other compounds, for instance any of those mentioned above, the active ingredients may be provided in a single composition, where they can be added together to the system, for instance a single aqueous formulation with one or both the actives in solution, or may be provided in separate compositions, for instance where they are added at separate points in the system or are incompatible with each other.

The following examples illustrate the invention:

Example 1 - Preparation of CBNTMP

To a resin flask equipped with mechanical stirred, water cooled condenser, thermometer and dropping funnel was added 2053g (4 moles) of 71.9% phosphorous acid. Water was removed by vacuum distillation to give an acid concentration of 97.9%. 1825g (4 moles) of 36% hydrochloric acid was added via the dropping funnel, 273g (1 mole) of urea was added over 3 hours and the temperature was increased to 100°C. 1490g (4 moles) of 36.5% formaldeyde solution was added over 2.5 hours and the reaction mixture maintained at reflux for 3 hours. The final product was purified by successive vacuum distillation and yielded a pale yellow solution containing 50% active phosphonate.

Example 2 - Iron Resistance

CBNTMP was compared with various other conventional scale inhibitor phosphonates for its iron resistance, using the method described above, The results are given in the table below.

TABLE 1

| Phosphonate | % Phosphonate remaining in solution (iron resistance) |
|---|---|
| CBNTMP | 55 |
| NTMP | 8 |
| EDTMP | <5 |
| DETMP | 8 |
| HMDTMP | 12 |
| HEDP | 12 |

The results show that CBNTMP has a very high resistance to iron in this static test. In contrast all of the other phosphonates are severely adversely affected by the presence of iron.

Example 3 - Calcium carbonate dynamic scale inhibition (in the absence of iron) .

This test is designed to monitor the ability of an additive to inhibit the formation of calcium carbonate scale under dynamic conditions. It is a closer simulation of a real-life system than the previously described threshold tests and gives a better measure of the ability of an additive to inhibit scale in a practical system.

The test is carried out on P-MAC apparatus. The P-MAC dynamic scale testing equipment operates on the following principle : scaling solutions (calcium chloride and sodium hydrogen carbonate) are mixed and the resulting calcium bicarbonate solution is pumped through a microbore tube situated in a heating bath at higher temperature. When the solution enters the hot coil, carbon dioxide is expelled and the less soluble calcium carbonate is produced. This is deposited as a thin layer on the walls of the tube. This deposition will decrease the bore diameter of the tube resulting in an increase in fluid velocity and pressure drop across the coil. The change in pressure across the coil is monitored and displayed as a scaling curve on an external recorder.

The stock solutions are calcium chloride 1.25 gle and sodium hydrogen carbonate 3.33g/ℓ. These are mixed to give the following conditions:
CaH : 550ppm (as $CaCO_3$)
Malk : 975ppm (as $CaCO_3$)
Temp : 65°C
combined Flowrate : 1530 : ml/h
The mixed solutions are pumped through the tube for a period during which there is gradual scale build up and thus pressure increase. When the pressure reaches a predetermined value the addition of additive, under test to give a concentration of 0.5ppm is commenced. Pressure recording is continued until a change in the gradient of the scaling curve can be detected and measured.

The % inhibition is calculated from the scaling curve produced :

ie

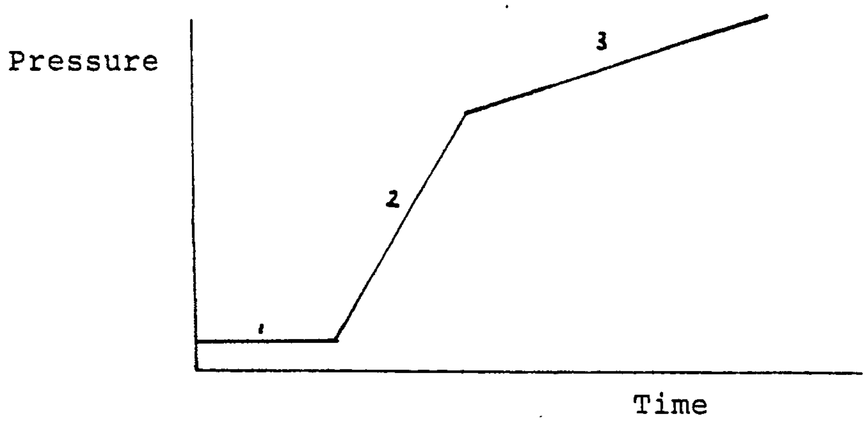


1. Baseline : no scale formation (gradient zero)
2. Scale formation
3. Scale inhibition

$$\% \text{ inhibition} = \frac{\text{Gradient 2} - \text{Gradient 3}}{\text{Gradient 2}} \times 100$$

The results are shown in Table 3 below:

TABLE 3

| Phosphonate | % Inhibition |
|---|---|
| CBNTMP | 63 |
| NTMP | 66 |
| EDTMP | 56 |
| DETMP | 60 |
| HMDTMP | 50 |
| HEDP | 63 |

The results show that in this test CBNTMP is a very effective calcium carbonate scale inhibitor and compares very well with established phosphonate scale inhibitors.

Example 4 - Barium Sulphate Dynamic Scale Inhibition

This test uses the same PMAC equipment as Example 3, which in this case operates on the following principle : scaling solutions (formation brine and sea water) are mixed immediately before a coil situated in a hot water bath. The resulting barium sulphate scale is deposited as a thin layer on the walls of the coil. This deposition will decrease the bore diameter of the tube resulting in an increase in fluid velocity and pressure drop across the coil. The change in pressure across the coil is monitored and displayed as a scaling curve on an external recorder.

The reagents used are as follows:

| Formation Brine | | |
|---|---|---|
| NaCl<br>$BaCl_2.2H_2O$<br>$SrCl_2.6H_2O$<br>$MgCl_2.6H_2O$<br>$CaCl_2.2H_2O$<br>KCl | 46g<br>0.752g<br>1.6g<br>1.472g<br>4.28g<br>1.68g | Stock solution of formation brine prepared by dissolving salts in deionised water and making up to 2 litres in a volumetric flask. |
| Synthetic Sea Water | | |
| $CaCl_2.2H_2O$ | 3.24g | |
| $MgCl_2.6H_2O$<br>KCl<br>NaCl<br>$Na_2SO_4.10H_2O$<br>$NaHCO_3$ | 21.72g<br>1.5g<br>49.12g<br>14.42g<br>0.4g | Stock solution of synthetic sea water prepared by dissolving salts in deionised water and making up to 2 litres in a volumetric flask. |
| Dilute additive solution (1000ppm active) | | |
| 2M nitric acid. | | |

The test is carried out under the following conditions:

[$Ba^2$] : 105ppm
Temp : 70 °C
Combined Flow Rate : 1500mls/hour
Additive Concentration : As required to give 25ppm

Test solutions are prepared in deionised water. The water bath is set at required temperature. The system is flushed out with 100mls of 2M nitric acic and rinsed with deionised water until pH of effluent is approximately neutral. It is ensured that no air bubbles are present in the system by bleeding the tube at the pressure sensor outlet. One inlet tube is installed in the formation brine and one tube is installed in the sea water.

The additive solution under study is prepared by pipetting the required volume of additive stock solution into a 500ml volumetric flask and making up in sea water .

The pump and chart recorder are started simultaneously. The coil is prescaled by 0.3 p.s.i. and then the 2 way valve on the sea water inlet tube is switched from sea water alone to sea water with additive under study.

The test is continued until a change in gradient is apparent.

At the end of test the system is flushed out with 2M nitric acid.

The % inhibition is calculated in the same way from the scaling curve as in Example 3.

The results are shown in Table 4.

TABLE 4

| Phosphonate | % Efficiency |
|---|---|
| CBNTMP | 90 |
| NTMP | 80 |
| EDTMP | 28 |
| DETPMP | 95 |
| HMDTMP | 86 |
| HEDP | 92 |

The results show that in this test CBNTMP is a very effective barium sulphate scale inhibitor and compares very well with established phosphonate scale inhibitors.

Example 5 - Barium sulphate static scale inhibition in the presence and absence of iron

This test is carried out under the following conditions:
Temperature : 90°C
[Ba] : 70ppm
Sea Water : 5%
Formation Water : 95%
[$Fe^{2+}$] : 2ppm Duration : 20 Hours

Sea Water and water are mixed in the given proportions. THe additive is then added at the required dose, any ferrous ion is added and the pH adjusted as required. The solution is then heated to the desired temperature and barium sulphate added to the desired level. At the end of of the test period a sample of the supernatant is withdrawn and analysed for the quantity of dissolved barium. The per cent inhibition is calculated by the following formula:

$$\%\ \text{inhibition} = \frac{\text{amount of Ba in test solution}}{\text{amount of Ba in original solution}}$$

CBTMP was tested by the method and the results are shown in Table 5

TABLE 5

| Dose ppm | $Fe^{2+}$ | pH | % Inhib. |
|---|---|---|---|
| 10 | - | 4 | 81 |
| 10 | 2 | 4 | 86 |
| 20 | - | 4 | 84 |
| 20 | 2 | 4 | 87 |
| 10 | - | 7 | 87 |
| 10 | 2 | 7 | 89 |
| 20 | - | 7 | 84 |
| 20 | 2 | 7 | 86 |

The results show that the presence of iron does not adversely affect, or even beneficially affects, the ability of CBTMP to prevent barium sulphate scale, that is act as a threshold inhibitor for barium sulphate.

Example 6

In a similar manner to the process described in Example 1, the methylenephosphonic acid derivatives of malonamide, methylurea, thiourea and acetamide shown in Table 6 were produced. They were tested for their barium sulphate scale inhibition in the absence of iron (as in Example 5), iron stability (as described in Example 2) and iron sequestration (per a standard method) properties, and for their static and dynamic calcium carbonate scale inhibition in the presence and absence of dissolved iron. The dynamic calcium carbonate scale inhibition tests in the presence and absence of iron are carried out as follows:

This test uses the same P-MAC equipment as Example 3 and 4 but the method and conditions have been adapted to show the effect of iron in the system. A recirculating test has been devised which permits a much longer contact time between the individual phosphonate and the iron. The test is run on the

principle that the inhibitor is added at a dose level which gives almost complete inhibition. Iron is added to the system and the potentially scale forming solution is recirculated in the presence of both inhibitor and iron. Any additive which is particularly sensitive to iron will have a reduced scale inhibiting efficiency and should not be able to prevent scale from forming.

On the other hand, additives which are not sensitive towards iron will be unaffected and should maintain a high level of inhibition.

The test is carried out under the following conditions:

CaH : 200ppm
Malk : 375ppm
Temp : 75°C
Flow Rate : 1500mls/hour
Additive Concentration : 0.5ppm
Iron concentration : 10ppm

The test solution is made up including all of the above components and is recirculated through the system at the above rate.

The % scale inhibiting efficiency may be calculated from determining the gradients of the scaling curves and comparing to a blank curve ie with no inhibitor present.

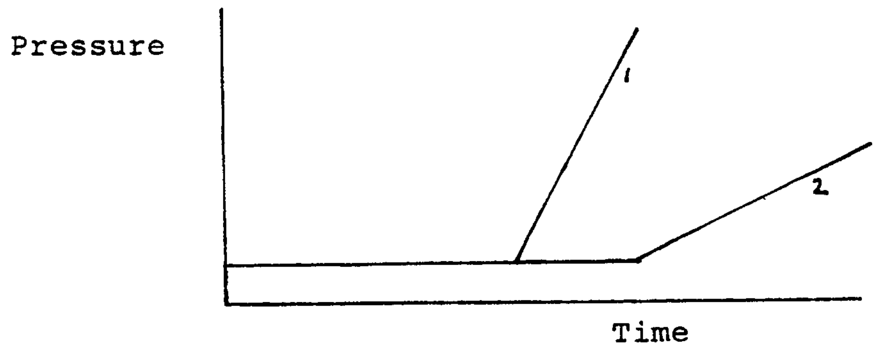


1 gradient blank ie no inhibitor
2 gradient treated ie with inhibitor

Calculation

$$\% \text{ scale inhibiting efficiency} = \frac{\text{gradient 1} - \text{gradient 2}}{\text{gradient 1}} \times 100$$

The static calcium carbonate scale inhibition test in the presence and absence of iron is carried out as in Example 2 by the method described in the description herein.

All of the results are shown in Table 6 below:

The results show that all of the compounds have an adequate ability to inhibit calcium carbonate scale deposition in a static test in the absence of iron. At high dose levels the static calcium carbonate scale inhibition is adequate although at low dose levels this ability is reduced though still observable. In the dynamic calcium carbonate tests the urea and acetamide derivatives appear to be most adversely affected by the presence of iron, although the scale inhibiting property of the urea derivative is the best of the compounds tested in the absence of iron. The results also show that the barium sulphate scale inhibition ability of the urea derivative is the best of all those compounds tested (and example 5 shows that that is not adversely affected by the presence of iron). Of the other compounds tested all give some barium sulphate scale inhibition at the higher dose level of 50 ppm and the acetamide derivative gives adequate results even at 25 ppm.

TABLE 6

| AMIDE | PHOSPHONATE STRUCTURE (1) | IRON STAB | IRON SEQN | DOSE PPM | BaSO4 SCALE INHIBITION | CALCIUM CARBONATE SCALE INHIBITION | | | | | |
|---|---|---|---|---|---|---|---|---|---|---|---|
| | | | | | | DOSE PPM | STATIC | DOSE PPM | STATIC +Fe | DYNAMIC | DYNAMIC +Fe |
| UREA | 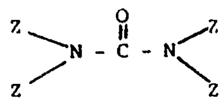 | 55% | 25mg/g | 25<br>50 | 90%<br>N/A | 2.5<br>5<br>10 | 77%<br>85%<br>96% | 2.5<br>5<br>10 | 0<br>35<br>93% | 90% | 24% |
| MALONAMIDE | 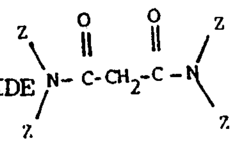 | 38% | 23mg/g | 25<br>50 | 27%<br>82% | 5<br>10 | 100%<br>100% | 5<br>5 | 29%<br>77% | 32% | 37% |
| METHYLUREA | 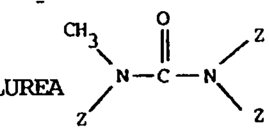 | 34% | 23mg/g | 25<br>50 | 0%<br>35% | 5<br>10 | 100%<br>100% | 5<br>10 | 33%<br>75% | 24% | 32% |
| THIOUREA | 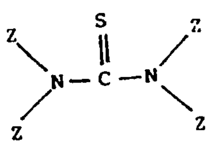 | 28% | 22mg/g | 25<br>50 | 0%<br>76% | 5<br>10 | 100%<br>100% | 5<br>10 | 33%<br>75% | 24% | 32% |
| ACETAMIDE | 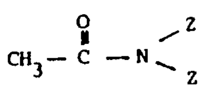 | 20% | 23mg/g | 25<br>50 | 54%<br>88% | 5<br>10 | 97%<br>97% | 5<br>10 | 35%<br>86% | 63% | 20% |

(1) in this table Z is a methylenephosphonic acid group

## Claims

1. A process of inhibiting scale formation in an aqueous liquid comprising adding a scale inhibitor to the aqueous liquid, characterised in that the scale inhibitor is a compound of the general formula I

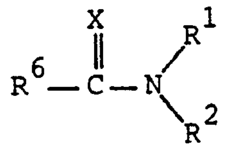

I

in which $R^6$ is $-NR^3R^4$, $R^7\overset{X}{\overset{\|}{C}}NR^3R^4$, hydrogen or a straight or branched chain alkyl group, in which $R^7$ is $C_{1-4}$ branched or straight chain alkylene, $R^1$ to $R^4$ are different or are the same and each is selected from hydrogen, straight and branched chain alkyl groups and $C_{1-4}$ branched and straight chain alkylene-phosphonic acid groups or water soluble salts thereof, provided that at least one of $R^1$ to $R^4$ represents one of the said alkylenephosphonic acid groups and the or each X is independently selected from an oxygen atom, a sulphur atom and a group $NR^5$ in which $R^5$ is an alkyl or aryl group, or a water soluble salt thereof.

2. A process according to claim 1 in which $R^6$ is $-NR^3R^4$ or $-R^7\overset{X}{\overset{\|}{C}}NR^3R^4$, preferably $-NR^3R^4$.

3. A process according to claim 1 or 2 in which at least 2 of $R^1$ to $R^4$ and preferably all of $R^1$ to $R^4$ represent an alkylene phosphonic acid group.

4. A process according to any preceding claim in which the alkylene group of the alkylene phosphonic is methylene.

5. A process according to any preceding claim in which the or each X is an oxygen atom.

6. A process according to any preceding claim in which the scale inhibitor is carboxyl bisnitrilotetra (methylenephosphonic acid), (urea tetramethylenephosphonic acid).

7. A process according to any preceding claim in which the compound has an iron resistance (as herein before defined) of at least 50%.

8. A process according to any preceding claim in which the scale formation which is inhibited is barium scale, preferably barium sulphate scale.

9. A process according to any preceding claim in which the aqueous liquid contains iron, preferably in an amount of at least 1 ppm, often at least 5 or 10 ppm.

10. A process according to any preceding claim in which the scale inhibitor is added in substoichiometric amounts to the aqueous liquid.

11. A process according to any preceding claim in which the scale inhibitor is added to the aqueous liquid in an amount in the range 0.05 to 50 ppm, preferably 0.1 to 25 ppm, more preferably 0.5 to 10 ppm.

12. Use of a compound as defined in any of claims 1 to 7 as a scale inhibitor, preferably in a process according to any of claims 8 to 11.

European Patent Office

# EUROPEAN SEARCH REPORT

Application Number

EP 90 30 7508

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X<br>A | US-A-4 090 959 (D.J. SHARF et al.)<br>* Whole document * | 1-5<br>7-12 | C 02 F 5/14 |
| A | FR-A-2 229 704 (MONSANTO)<br>* Pages 1-7; page 10; pages 19-20 * &<br>US-A-4 079 006 (Cat. D,A) | 1,10-12 | |
| A | FR-A-2 342 982 (ROHM & HAAS)<br>* Pages 76-89 * | 1-6 | |
| A | US-A-4 048 374 (H.J. KÖTZSCH et al.)<br>* Column 9, lines 29-30 * | 1-2 | |
| A | US-A-4 092 244 (T.J. SUEN et al.)<br>* Whole document * | 1-12 | |
| D,A | US-A-4 801 388 (D.W. FONG et al.)<br>* Columns 3,9,12 * | 1,8-12 | |
| D,A | EP-A-0 010 147 (J.A. BENCKISER)<br>* Page 2; claims 1-3 * | 1-2,10-12 | TECHNICAL FIELDS SEARCHED (Int. Cl.5)<br>C 02 F<br>C 23 F<br>C 07 F |

The present search report has been drawn up for all claims

| Place of search | Date of completion of the search | Examiner |
|---|---|---|
| THE HAGUE | 22-10-1990 | VAN AKOLEYEN H.T.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document